# EUROPÄISCHE PATENTANMELDUNG

(11) **EP 3 944 758 A1**
(43) Veröffentlichungstag der Anmeldung: **02.02.2022**
(21) Anmeldenummer: 21185588.7
(22) Anmeldetag: 14.07.2021
(51) Int. Cl.: A01G 27/02, A01G 9/04

(54) **ABDICHTUNGSRING FÜR EIN PFLANZENKULTIVIERUNGSSYSTEM SOWIE PFLANZENKULTIVIERUNGSSYSTEM MIT ABDICHTUNGSRING**

(30) Priorität: 30.07.2020 DE 102020209639
(71) Anmelder: BSH Hausgeräte GmbH, 81739 München (DE)
(72) Erfinder: Dornik, Primoz, 3270 Lasko (SI); Holcinger, Tadej, 3220 Store (SI); Koell, Martin, 83362 Surberg (DE); Leng, Sascha, 80339 München (DE); Longhino, Werner, 84561 Mehring (DE); Scheffelmeier, Marco, 80687 München (DE); Tan, E-Lin, 85591 Vaterstetten (DE); Terrádez Alemany, Maria, 80469 München (DE)

(57) **Zusammenfassung**

Die Erfindung betrifft einen Abdichtungsring (10) für ein Pflanzenkultivierungssystem (1), der einen ersten Abdichtungsabschnitt (11) und einen zweiten Abdichtungsabschnitt (12) umfasst. Der erste Abdichtungsabschnitt (11) ist dazu eingerichtet, abdichtend mit einem Tankgefäß (20) des Pflanzenkultivierungssystems (1) verbunden zu werden, und der zweite Abdichtungsabschnitt (12) ist dazu eingerichtet, abdichtend mit einer in das Tankgefäß (20) eingesetzten Bewässerungsschale (30) für Pflanzen verbunden zu werden. Die Erfindung betrifft ferner ein Pflanzenkultivierungssystem (1) mit einem Tankgefäß (20), einer Bewässerungsschale (30) zum herausnehmbaren Einsetzen in das Tankgefäß (20) und mit einem Abdichtungsring (10).

## Beschreibung

Die vorliegende Erfindung betrifft einen Abdichtungsring für ein Pflanzenkultivierungssystem zur Kultivierung von Pflanzen. Darüber hinaus betrifft die vorliegende Erfindung ein Pflanzenkultivierungssystem, das einen Abdichtungsring umfasst.

Die Kultivierung von Pflanzen in Innenräumen ist zum gewerblichen Anbau verbreitet, erfreut sich aber auch in Wohnbereichen zur Zierde, zur Schaffung eines gewünschten Raumklimas und/oder zur Nutzung der Pflanzen beispielsweise zur Gewinnung von Gewürzen oder sonstigen Zutaten zum Kochen oder Backen großer Beliebtheit. Die jeweiligen Pflanzen können dabei insbesondere in Erde oder als Hydrokultur in einem Substrat wurzeln; derartige Substrate, die bei der Hydrokultur in wassergefüllten Behältern angeordnet sind, können beispielsweise Tongranulate oder und/Steinwolle enthalten. In speziellen Anwendungen derartiger Hydrokultur werden hydroponische Pflanzsysteme eingesetzt, bei denen verschiedene die Entwicklung einer jeweiligen Pflanze beeinflussende Parameter automatisch überwacht und geregelt werden können.

Bei bekannten Pflanzenkultivierungssystemen werden die jeweiligen Pflanzen jeweils mittels einer Bewässerungsschale bewässert, die in ein mit Wasser befülltes Tankgefäß eingesetzt oder einzusetzen ist. Die Pflanzen können dabei in einer oder mehreren Kapseln wurzeln, die in mindestens einem Kapselhalter und mit diesem in der Bewässerungsschale angeordnet oder anzuordnen sein kann/können. Eine elektrische Pumpeinheit kann dabei dazu eingerichtet sein, Wasser aus dem Tankgefäß in die Bewässerungsschale zu pumpen und so automatisch die Versorgung der Pflanzen zu gewährleisten. Darüber hinaus können bekannte Pflanzenkultivierungssysteme mindestens eine Lampe zur Beleuchtung von in bzw. aus der Bewässerungsschale keimendem und/oder wachsenden Pflanzen umfassen.

Die jeweiligen elektrischen Einheiten derartiger Pflanzenkultivierungssysteme können jeweils in oder am Tankgefäß angeordnet oder mit diesem verbunden sein. Das Tankgefäß weist bei derartigen Varianten einen Stromanschluss auf. Andere bekannte Pflanzenkultivierungssystem umfassen ein Sockelelement, das einen Elektroanschluss hat und mittels dessen die elektrischen Komponenten (wie beispielsweise ein Antrieb für die Pumpeinheit) mit elektrischer Energie versorgt werden können. Das Tankgefäß kann dabei zum Betrieb abnehmbar auf dem Sockelelement positioniert sein.

Der vorliegenden Erfindung liegt die Aufgabe zugrunde, eine verbesserte Technik für eine Kultivierung von Pflanzen in Innenräumen bereitzustellen.

Die Aufgabe wird gelöst durch einen Abdichtungsring gemäß Anspruch 1 und ein Pflanzenkultivierungssystem gemäß Anspruch 8. Vorteilhafte Ausführungsformen sind in den Unteransprüchen, der Beschreibung und den Figuren offenbart.

Ein erfindungsgemäßer Abdichtungsring dient dazu, einen Zwischenraum zwischen einem Tankgefäß und einer darin eingesetzten Bewässerungsschale für Pflanzen (insbesondere zur Aufnahme zumindest eines Wurzelbereichs von Pflanzen) abzudichten. Der Abdichtungsring umfasst einen ersten Abdichtungsabschnitt, der dazu eingerichtet ist, (feuchtigkeits-)abdichtend mit dem Tankgefäß des Pflanzenkultivierungssystems verbunden zu werden, beispielsweise so, dass der erste Abdichtungsabschnitt an einer Oberfläche des Tankgefäßes entlang verläuft bzw. anliegt. Zudem umfasst der Abdichtungsring einen zweiten Abdichtungsabschnitt, der dazu eingerichtet ist, abdichtend mit der in das Tankgefäß eingesetzten Bewässerungsschale verbunden zu werden, z.B. so, dass der zweite Abdichtungsabschnitt insbesondere außen an der Bewässerungsschale anliegt.

Mittels eines erfindungsgemäßen Abdichtungsrings kann somit ein Ausspritzen oder - schwappen von Wasser aus dem Tankgefäß eines Pflanzenkultivierungssystems verhindert werden, wenn das Tankgefäß mit der darin angeordneten Bewässerungsschale bewegt wird. Insbesondere erlaubt die vorliegende Erfindung damit ein vereinfachtes Transportieren des Tankgefäßes mitsamt der Bewässerungsschale, darin kultivierten Pflanzen und Wasser.

Ein erfindungsgemäßes Pflanzenkultivierungssystem dient einer Pflanzenkultivierung. Es umfasst ein Tankgefäß zur Aufnahme von Wasser (das ggf. mit Zusatzstoffen wie beispielsweise Dünger angereichtert sein kann) sowie eine Bewässerungsschale für Pflanzen, insbesondere zur Aufnahme zumindest eines Wurzelbereichs von Pflanzen. Die Pflanzen können dabei beispielsweise in einer oder mehreren Kapseln wurzeln, die (z.B. mittels mindestens eines Kapselhalters) mindestens teilweise in der Bewässerungsschale angeordnet oder anzuordnen sein kann/können; Kapsel/n und/oder Kapselhalter kann/können ebenfalls zu einem erfindungsgemäßen Pflanzenkultivierungssystem gehören. Die Bewässerungsschale des erfindungsgemäßen Pflanzenkultivierungssystems ist herausnehmbar in das Tankgefäß eingesetzt oder einzusetzen. Weiterhin umfasst das Pflanzenkultivierungssystem einen passenden erfindungsgemäßen Abdichtungsring gemäß einer der in dieser Schrift offenbarten Ausführungsformen, der also dazu eingerichtet ist, das Tankgefäß und die Bewässerungsschale, wenn sie in das Tankgefäß eingesetzt ist, abdichtend miteinander zu verbinden.

Gemäß vorteilhaften Ausführungsformen umfasst das Pflanzenkultivierungssystem zudem eine Pumpeinheit zum Pumpen von Wasser aus dem Tankgefäß in die Bewässerungsschale.

Das Tankgefäß kann vorzugsweise kabellos ausgebildet sein, d.h. frei von einem Elektrokabel zur Energieversorgung elektrischer Komponenten (die Energieversorgung kann dann beispielsweise mittels mindestens eines Akkus oder mittels eines Sockelelements erfolgen, wie es weiter unten beschrieben ist).

Ein durch die Kabelfreiheit besonders erleichterter Transport des Tankgefäßes wird dann also durch einen erfindungsgemäßen Abdichtungsring weiter vereinfacht, weil ein Anwender das Tankgefäß mit darin angeordnetem Wasser, Bewässerungsschale und Pflanzen bequem tragen kann, ohne sorgsam darauf achten zu müssen, dass kein Wasser überschwappt. Werden mit dem Pflanzenkultivierungssystem beispielsweise Küchenkräuter kultiviert, kann der Anwender diese bequem und ohne Tropfrisiko zum Kochen oder Anrichten im Tankgefäß z.B. in die Küche bringen und nach ihrer Verwendung zurück an eine möglicherweise andere Position stellen, an der das Pflanzenkultivierungssystem beispielsweise aus Platz- oder Dekorationsgründen üblicherweise steht; es versteht sich, dass Entsprechendes für andere Pflanzen gilt.

Gemäß vorteilhaften Ausführungsformen umfasst das Pflanzenkultivierungssystem ein Sockelelement, auf dem das Tankgefäß abnehmbar anzuordnen ist. Insbesondere kann mindestens eine vorzugsweise zum Pflanzenkultivierungssystem gehörige elektrische Komponente dazu eingerichtet sein, mittels des Sockelelements, das vorzugsweise einen Elektroanschluss aufweist, mit elektrischer Energie versorgt zu werden. Derartige elektrische Komponenten können beispielsweise einen Antrieb einer Pumpeinheit, einen oder mehrere Sensor/en, eine Beleuchtungseinrichtung und/oder mindestens eine Kommunikationseinheit zur Kommunikation mit einem externen Datenverarbeitungsgerät wie beispielsweise einem Rechner, einem Mobiltelefon und/oder einer Anzeigevorrichtung umfassen. Zur Übertragung der elektrischen Energie vom Sockelelement in ggf. im Tankgefäß angeordnete elektrische Komponenten können Tankgefäß und Sockelelement zueinander passende Steckkontakte aufweisen. Alternativ kann das Tankgefäß frei von elektrischen Kontakten ausgebildet sein; in diesem Fall können Tankgefäß und Sockelelement dazu eingerichtet sein, elektrische Energie z.B. mittels Magnetkopplung und/oder induktiver Kopplung zu übertragen.

Das Pflanzenkultivierungssystem kann jeweils insbesondere ein hydroponisches sein, bei dem also verschiedene Parameter, die die Entwicklung einer oder mehrerer jeweiliger Pflanze/n beeinflussen, automatisch überwacht und geregelt werden können.

Die abdichtende Verbindung, zu der der erste Abdichtungsabschnitt eingerichtet ist, kann insbesondere wassergeschützt sein, beispielsweise mindestens 30 Minuten lang wasserdicht unter einem Druck von bis mindestens 2bar, bis mindestens 3bar oder bis mindestens 5bar. Entsprechendes gilt (alternativ oder zusätzlich) für den zweiten Abdichtungsabschnitt.

Gemäß vorteilhaften Ausführungsformen der vorliegenden Erfindung ist der Abdichtungsring monolithisch ausgebildet; dadurch werden seine Herstellung vereinfacht und seine Haltbarkeit verbessert.

Vorzugsweise ist ein erfindungsgemäßer Abdichtungsring mindestens bereichsweise elastisch (nachgiebig) ausgebildet. Eine solche Elastizität kann auf einem Material des Abdichtungsrings (z.B. einem Elastomer, insbesondere einem Silikonelastomer) und oder - insbesondere wenn der Abdichtungsring ganz oder zumindest teilweise aus einem festen Material wie beispielsweise einem festen Kunststoff besteht - auf seiner geometrischen Form beruhen. Die Elastizität ermöglicht einerseits einen festen Sitz im Zwischenraum zwischen dem Tankgefäß und der Bewässerungsschale, erleichtert zum anderen aber auch ein Herausnehmen der Bewässerungsschale und/oder ein Abnehmen des Abdichtungsrings, beispielsweise zum Reinigen der einzelnen Komponenten (insbesondere des Abdichtungsrings selbst, eines Innenraums des Tankgefäßes und/oder einer Außenfläche der Bewässerungsschale).

Gemäß vorteilhaften Ausführungsformen eines erfindungsgemäßen Abdichtungsrings umfasst der erste Abdichtungsabschnitt mindestens eine Anlagefläche, die dazu eingerichtet ist, im mit dem Tankgefäß verbundenen Zustand an einer (äußeren und/oder einer inneren) Oberfläche des Tankgefäßes anzuliegen. Auf diese Weise kann in dem jeweiligen Bereich eine besonders gute und stabile abdichtende Verbindung des Abdichtungsrings mit dem Tankgefäß erreicht werden.

Der erste Abdichtungsabschnitt kann beispielsweise einen Umlaufrand (z.B. in Form einer Lippe) umfassen, der dazu eingerichtet ist, das Tankgefäß im mit diesem verbundenen Zustand des Abdichtungsrings außen ganz oder teilweise zu umlaufen; der Abdichtungsring kann dann insbesondere dazu eingerichtet sein, über eine Randkante des Tankgefäßes gestülpt zu werden; als derartige Randkante ist dabei in dieser Schrift eine Kante des Tankgefäßes zu verstehen, die dieses in dessen vorgesehener Verwendungsausrichtung nach oben begrenzt. Die einem Innenbereich des Abdichtungsrings (also einem Bereich, den der Abdichtungsring umläuft) zugewandte Oberfläche eines solchen Umlaufrandes kann dann eine Anlagefläche wie erwähnt umfassen. Die Anlagefläche kann dann insbesondere ein Profil mit einem oder mehreren Vorsprüngen (z.B. einer oder mehreren Noppe/n, mindestens einem Wulst und/oder mindestens einer Lippe) aufweisen, der/die in Richtung eines vom Abdichtungsring umlaufenen Innenbereichs des Abdichtungsrings hervorsteht/ hervorstehen. Ein derartiges Profil kann dazu eingerichtet sein, mit einem entsprechenden Gegenprofil zusammenzuwirken, das an einer Außenfläche des Tankgefäßes ausgebildet sein kann. Insbesondere weist ein Tankgefäß eines einen derartigen Abdichtungsring umfassenden erfindungsgemäßen Pflanzenkultivierungssystems an seiner Außenfläche vorzugsweise ein derartiges (zum Profil der Anlagefläche des Abdichtungsrings passendes) Gegenprofil auf.

Alternativ oder zusätzlich kann der erste Abdichtungsabschnitt als eine Anlagefläche eine vom Innenbereich des Abdichtungsrings abgewandte Oberfläche aufweisen, die also einem Außenbereich des Abdichtungsrings zugewandt und dazu eingerichtet ist, an einer inneren Oberfläche des Tankgefäßes anzuliegen.

Eine derartige Anlagefläche kann dann ein Profil mit mindestens einem Vorsprung (z.B. einer oder mehrere Noppe/n und/oder mindestens einem Wulst und/oder mindestens einer Lippe) aufweisen, der/die nach außen (also in vom Innenbereich des Abdichtungsrings abgewandte Richtung) hervorstehen. Ein derartiges Profil kann dann dazu eingerichtet sein, mit einem entsprechenden Gegenprofil (z.B. mindestens einer Senke, einer (beispielsweise umlaufenden) Rinne und/oder einer Nut) zusammenzuwirken, das an einer Innenfläche des Tankgefäßes ausgebildet sein kann.

Das Profil kann in diesen Fällen somit jeweils dazu dienen, den Abdichtungsring am Tankgefäß zu fixieren und die Abdichtung zu gewährleisten bzw. zu verbessern. Zur leichteren Lösbarkeit aus dem Gegenprofil bzw. einem vereinfachten Einsetzen in das Gegenprofil kann der mindestens eine Vorsprung vorzugsweise elastisch ausgebildet sein.

Gemäß vorteilhaften Ausführungsformen ist in einem erfindungsgemäßen Abdichtungsring eine Aufnahmewölbung zur Aufnahme zumindest einer Randkante des Tankgefäßes ausgebildet. Ein derartiger Abdichtungsring ist somit dazu eingerichtet, mit seiner Aufnahmewölbung über die Randkante gestülpt zu werden. Auf diese Weise kann eine besonders gute und haltbare abdichtende Verbindung erreicht werden.

Ein erfindungsgemäßer Abdichtungsring kann vorzugsweise dazu eingerichtet sein, in einem bestimmungsgemäß mit dem Tankgefäß verbundenen Zustand in dieses (also in dessen Gefäßinnenraum) hineinzuragen, beispielsweise mindestens 1cm, mindestens 2cm oder mindestens 3cm. Auf diese Weise kann eine stabile Befestigung des Abdichtungsrings am Tankgefäß erreicht werden. Alternativ oder zusätzlich kann ein erfindungsgemäßer Abdichtungsring dazu eingerichtet sein, in einem bestimmungsgemäß mit dem Tankgefäß verbundenen Zustand höchstens 6cm, höchstens 4cm oder höchstens 3cm in den Gefäßinnenraum des Tankgefäßes hineinzuragen; dies gewährleistet eine gute Lösbarkeit des Abdichtungsrings vom Tankgefäß.

Gemäß vorteilhaften Ausführungsformen eines erfindungsgemäßen Abdichtungsrings weist der zweite Abdichtungsabschnitt ein Profil mit mindestens einem Vorsprung auf, der in Richtung eines Innenbereichs des Abdichtungsring (also zur Bewässerungsschale hin) hervorragt. Das Profil kann dabei (analog zum oben in Bezug auf den ersten Abdichtungsabschnitt Beschriebenen) als solche/n Vorsprung/Vorsprünge beispielsweise eine oder mehrere Noppe/n, mindestens einen (z.B. den Innenbereich des Abdichtungsrings umlaufenden) Wulst und/oder mindestens eine (z.B. den besagten Innenbereich umlaufenden) Lippe umfassen. Es kann dazu eingerichtet sein, in eine vorzugsweise mit einem an der Außenfläche der Aufnahmeschale ausgebildeten Gegenprofil zusammenzuwirken, das beispielsweise mindestens eine Senke, mindestens eine Rinne und/oder mindestens eine Nut umfassen kann, in die ein jeweiliger Vorsprung dann einzugreifen eingerichtet ist. Insbesondere weist eine Aufnahmeschale eines einen derartigen Abdichtungsring umfassenden erfindungsgemäßen Pflanzenkultivierungssystems an ihrer Außenfläche vorzugsweise ein derartiges (zum Profil am zweiten Abdichtungsabschnitt des Abdichtungsrings passendes) Gegenprofil auf.

Derartige Ausführungsvarianten ermöglichen eine besonders stabile und gut abdichtende Verbindung des Abdichtungsrings mit der Bewässerungsschale.

Vorzugsweise ist der zweite Abdichtungsabschnitt dazu eingerichtet, in einem eingesetzten Zustand des Abdichtungsrings und bei bestimmungsgemäßer Ausrichtung mindestens bereichsweise oberhalb einer Randkante des Tankgefäßes angeordnet zu sein. Dies ermöglicht eine besonders gute Stabilisierung der Bewässerungsschale im Tankgefäß durch den Abdichtungsring.

Insbesondere kann ein erfindungsgemäßer Abdichtungsring dazu eingerichtet sein, (in bestimmungsgemäßer Verwendung) einen Zwischenraum (insbesondere Spalt) zwischen dem Tankgefäß und der Bewässerungsschale zu übertunneln. In einer bestimmungsgemäßen Verwendungsausrichtung kann der Abdichtungsring dann einen oberhalb einer Randkante des Tankgefäßes liegenden Ringraum insbesondere nach oben begrenzen. Durch einen derartigen, im Ruhezustand mit Luft gefüllten Ringraum kann ein besonders großer Ausweichraum für schwappendes oder spritzendes Wasser im Tankgefäß geschaffen werden.

Der Abdichtungsring kann insbesondere als Spritzgussteil aus (beispielsweise festem) Kunststoff hergestellt sein.

Vorteilhaft sind Ausführungsformen, bei denen der Spritzgussring im Querschnitt ein schräges (bzw. geschertes) oder gerades U-Profil aufweist; in einer vorgesehenen Verwendungsausrichtung ist ein derartiges U-Profil dann vorzugsweise nach unten geöffnet. Derartige Spritzgussringe ermöglichen eine Materialersparnis und sind besonders einfach herzustellen.

Im Folgenden wird ein bevorzugtes Ausführungsbeispiel der Erfindung anhand zweier Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es versteht sich, dass reale Größenverhältnisse von den dargestellten abweichen können.

Es zeigen schematisch:
- Figur 1:: eine exemplarische Ausführungsform eines erfindungsgemäßen Pflanzenkultivierungssystems in einer Schnittansicht; und
- Figur 2:: eine Detailansicht der Figur 1 mit ergänzter Darstellung eines Spritzerrückführung.

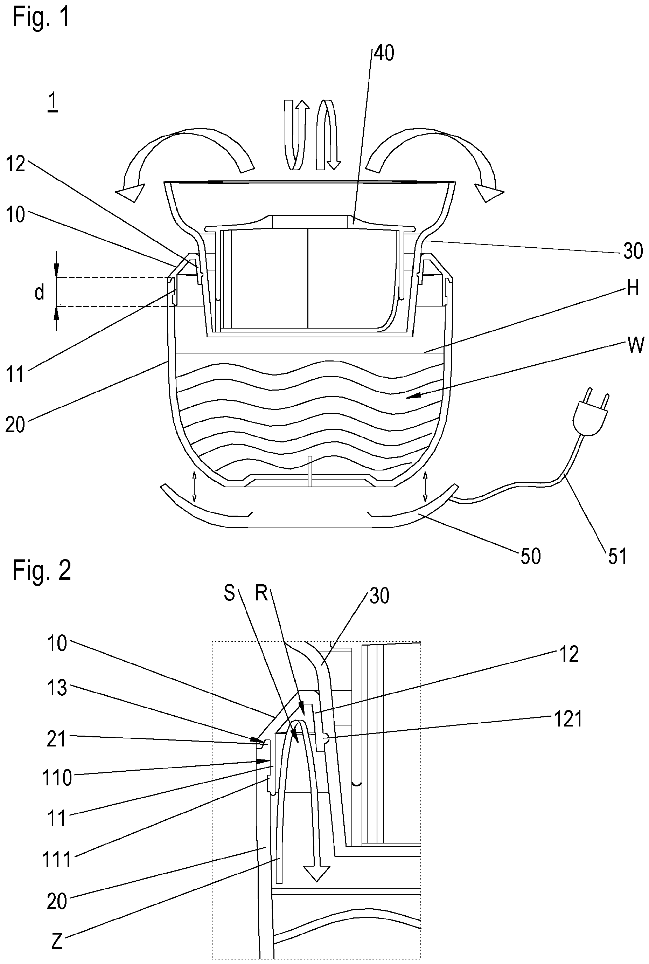

In Figur 1 ist in einer Schnittansicht ein Ausführungsbeispiel eines erfindungsgemäßen Pflanzenkultivierungssystems 1 dargestellt. Das Pflanzenkultivierungssystem 1 umfasst ein Tankgefäß 20 und eine in der dargestellten Situation in das Tankgefäß 20 eingesetzte Bewässerungsschale 30 zur Aufnahme (zumindest eines Wurzelbereichs) einer oder mehrerer nicht dargestellter Pflanze/n; diese können dabei aus einer oder mehreren (ebenfalls in der Figur nicht gezeigten) Kapsel/n wachsen, die in einen Kapselhalter 40 eingesetzt oder einzusetzen sein kann/können. Das Tankgefäß 20 ist vorliegend mit Wasser W befüllt; ein vorgesehener maximaler Füllstand ist in der Figur 1 mit H bezeichnet.

Darüber hinaus umfasst das Pflanzenkultivierungssystem 1 ein Sockelelement 50, von dem das Tankgefäß 20 in der gezeigten Situation abgenommen ist.

Das Sockelelement 50 weist vorliegend einen Elektroanschluss 51 auf, mittels dessen insbesondere ein elektrischer Antrieb einer nicht dargestellten Pumpeinheit zum Pumpen von Wasser W aus dem Tankgefäß 20 in die Bewässerungsschale mit elektrischer Energie versorgt werden kann. Das Tankgefäß 20 hingegen ist kabellos, d.h. frei von einem Elektrokabel zur Energieversorgung elektrischer Komponenten ausgebildet. Es kann damit auf besonders einfache Weise vom Sockelelement abgehoben sowie umpositioniert werden.

Bei einem derartigen Umpositionieren können jedoch Schwankungen am Tankgefäß 20, beispielsweise wie durch Pfeile angedeutet in eine Richtung in der Schnittebene der Figur 1 und/oder senkrecht zur Schnittebene, oft schwer verhindert werden. Derartige Schwankungen bewirken ein Schwappen und/oder Spritzen des enthaltenen Wassers W. Um zu verhindern, dass dabei Wasser aus dem Tankgefäß 20 entweicht, weist das Pflanzenkultivierungssystem 1 einen Abdichtungsring 10 gemäß einem Ausführungsbeispiel der vorliegenden Erfindung auf.

Der Abdichtungsring 10 ist dabei monolithisch sowie im vorliegenden Fall im Querschnitt als ein schräges bzw. geschertes U-Profil ausgebildet, das in der gezeigten bestimmungsgemäßen Verwendung und Ausrichtung nach unten geöffnet ist. Insbesondere kann der Abdichtungsring 10 vorzugsweise als ein Spritzgussteil ausgebildet sein.

In der dargestellten Situation schließt der Abdichtungsring 10 bestimmungsgemäß einen Zwischenraum zwischen dem Tankgefäß 20 und der Bewässerungsschale 30. Ein erster Abdichtungsabschnitt 11 des Abdichtungsrings 10 ist dabei abdichtend mit dem Tankgefäß 20 verbunden, und ein zweiter Abdichtungsabschnitt 12 des Abdichtungsrings 10 ist abdichtend mit der Pflanzenschale 30 verbunden. Derart eingesetzt ragt der Abdichtungsring 10 (vorliegend mit dem ersten Abdichtungsabschnitt 11) um eine Abmessung d in das Tankgefäß 20 hinein. Vorzugsweise beträgt d mindestens 1cm, mindestens 2cm oder mindestens 3cm und/oder höchstens 6cm, höchstens 4cm oder höchstens 3cm.

Wie insbesondere aus der Figur 2 erkennbar ist, die eine vergrößerte Detailansicht der Figur 1 bietet, ist in dem Abdichtungsring 10 eine Aufnahmewölbung 13 zur Aufnahme einer Randkante 21 des Tankgefäßes ausgebildet.

Der erste Abdichtungsabschnitt 11 weist im vorliegenden Ausführungsbeispiel eine von einem Innenbereich des Abdichtungsrings 10 (und damit vom Pflanzgefäß) abgewandte, also einem Außenbereich des Abdichtungsrings zugewandte Anlagefläche 110 auf. In der dargestellten Verwendungssituation des Abdichtungsrings 10 liegt die Anlagefläche 110 an einer inneren Oberfläche des Tankgefäßes 20 an.

An der Anlagefläche 110 ist vorliegend ein Profil mit einem Vorsprung 111 in Form eines umlaufenden Wulsts ausgebildet, der aus der Anlagefläche 110 hervorsteht und in ein an der Innenwand des Tankgefäßes ausgebildetes Gegenprofil in Form einer Rinne eingreift und so mit diesem zusammenwirkt. Die Verbindung zum Tankgefäß ist damit besonders gut abgedichtet.

Der zweite Abdichtungsabschnitt 12 weist vorliegend ebenfalls ein Profil auf. Dieses wird dabei durch einen Vorsprung 121 in Form eines Wulsts gebildet, der in Richtung des Innenbereichs des Abdichtungsrings 10 (also zur Bewässerungsschale hin) hervorsteht und mit einem in der Außenoberfläche der Bewässerungsschale ausgebildeten Gegenprofil in Form einer Rinne zusammenwirkt. Damit ist auch die Verbindung zur Bewässerungsschale 30 bei dem gezeigten Ausführungsbeispiel besonders gut abgedichtet.

Der Abdichtungsring 10 übertunnelt bei der dargestellten Ausführungsform und in der gezeigten Verwendungssituation einen Zwischenraum in Form eines Spalts S zwischen dem Tankgefäß 20 und der Bewässerungsschale 30 und begrenzt dabei insbesondere einen oberhalb der Randkante 21 des Tankgefäßes 20 liegenden Ringraum R. Bei einem Schwappen oder Aufspritzen von Wasser W infolge einer Schwankung des Tankgefäßes 20 kann, wie in der Figur 2 schematisch am Beispiel eines Spritzers Z gezeigt ist, Wasser bis in den Ringraum R hinein aufsteigen, wird dann aber vom Abdichtungsring 10 zurück in das Tankgefäß geworfen. Damit kann das Tankgefäß bequem sicher und trocken getragen werden.

Offenbart ist ein Abdichtungsring 10 für ein Pflanzenkultivierungssystem 1, der einen ersten Abdichtungsabschnitt 11 und einen zweiten Abdichtungsabschnitt 12 umfasst. Der erste Abdichtungsabschnitt 11 ist dazu eingerichtet, abdichtend mit einem Tankgefäß 20 des Pflanzenkultivierungssystems 1 verbunden zu werden, und der zweite Abdichtungsabschnitt 12 ist dazu eingerichtet, abdichtend mit einer in das Tankgefäß 20 eingesetzten Bewässerungsschale 30 für Pflanzen verbunden zu werden.

Offenbart ist ferner ein Pflanzenkultivierungssystem 1 mit einem Tankgefäß 20, einer Bewässerungsschale zum herausnehmbaren Einsetzen in das Tankgefäß 20 und mit einem Abdichtungsring.

### Bezugszeichen

- 1: Pflanzenkultivierungssystem

- 10: Abdichtungsring
- 11: erster Abdichtungsabschnitt
- 12: zweiter Abdichtungsabschnitt
- 13: Aufnahmewölbung

- 20: Tankgefäß
- 21: Randkante

- 30: Bewässerungsschale

- 40: Kapselhalter

- 50: Sockelelement
- 51: Elektroanschluss

- 110: Anlagefläche des ersten Abdichtungsabschnitts 11
- 111: Vorsprung an der Anlagefläche 110

- 121: Vorsprung am zweiten Abdichtungsabschnitt 12

- d: Abmessung
- H: vorgesehener maximaler Füllstand des Tankgefäßes 20
- S: Spalt zwischen Tankgefäß 20 und Bewässerungsschale 30
- R: Ringraum
- W: Wasser
- Z: Spritzer

## Patentansprüche

1. Abdichtungsring (10) für ein Pflanzenkultivierungssystem (1), wobei der Abdichtungsring (10) einen ersten und einen zweiten Abdichtungsabschnitt (11, 12) umfasst,
- wobei der erste Abdichtungsabschnitt (11) dazu eingerichtet ist, abdichtend mit einem Tankgefäß (20) des Pflanzenkultivierungssystems (1) verbunden zu werden, und
- wobei der zweite Abdichtungsabschnitt (12) dazu eingerichtet ist, abdichtend mit einer in das Tankgefäß (20) eingesetzten Bewässerungsschale (30) für Pflanzen verbunden zu werden.

2. Abdichtungsring (10) gemäß Anspruch 1, der monolithisch ausgebildet ist.

3. Abdichtungsring (10) gemäß einem der Ansprüche 1 oder 2, wobei der erste Abdichtungsabschnitt (11) mindestens eine Anlagefläche (110) zur Anlage an einer Oberfläche des Tankgefäßes (20) umfasst, wobei die Anlagefläche (110) ein Profil mit einem oder mehreren Vorsprüngen (111) aufweist.

4. Abdichtungsring (10) gemäß einem der vorherigen Ansprüche, in dem eine Aufnahmewölbung (13) zur Aufnahme zumindest einer Randkante (21) des Tankgefäßes (20) ausgebildet ist.

5. Abdichtungsring (10) gemäß einem der vorherigen Ansprüche, der dazu eingerichtet ist, im mit dem Tankgefäß (20) verbundenen Zustand bereichsweise
- mindestens 1cm, mindestens 2cm oder mindestens 3cm und/oder
- höchstens 6cm, höchstens 4cm oder höchstens 3cm
in das Tankgefäß (20) hineinzuragen.

6. Abdichtungsring (10) gemäß einem der vorherigen Ansprüche, wobei der zweite Abdichtungsabschnitt (12) ein Profil mit mindestens einem Vorsprung (121) aufweist, der in Richtung eines vom Abdichtungsring (10) umlaufenen Innenbereichs herausragt.

7. Abdichtungsring (10) gemäß einem der vorherigen Ansprüche, der dazu eingerichtet ist, einen Spalt (S) zwischen dem Tankgefäß (20) und der Bewässerungsschale (30) zu übertunneln.

8. Pflanzenkultivierungssystem (1) zur Pflanzenkultivierung, das umfasst:
- ein Tankgefäß (20) zur Aufnahme von Wasser (W),
- eine Bewässerungsschale (30) für Pflanzen und zum herausnehmbaren Einsetzen in das Tankgefäß (20) sowie
- einen Abdichtungsring (10) gemäß einem der vorhergehenden Ansprüche, der dazu eingerichtet ist, das Tankgefäß (20) und die Bewässerungsschale (30) in deren eingesetztem Zustand abdichtend miteinander zu verbinden.

9. Pflanzenkultivierungssystem gemäß Anspruch 8, das zudem eine Pumpeinheit zum Pumpen von Wasser (W) aus dem Tankgefäß (20) in die Bewässerungsschale (30) sowie ein Sockelelement (50) umfasst, auf dem das Tankgefäß (20) abnehmbar anzuordnen ist und das eine Antriebseinheit der Pumpeinheit zumindest teilweise umfasst.
